Europäisches Patentamt

(19) European Patent Office

Office européen des brevets

(11) Publication number: **0 110 282**
**A1**

## (12) EUROPEAN PATENT APPLICATION

(21) Application number: 83111620.7

(22) Date of filing: 21.11.83

(51) Int. Cl.³: **H 04 N 3/22**

(30) Priority: 23.11.82 US 443820

(43) Date of publication of application: 13.06.84
**Bulletin 84/24**

(84) Designated Contracting States: DE FR GB NL

(71) Applicant: TEKTRONIX, INC., D/S Y3-121 4900 S.W.
Griffith Drive P.O. Box 500, Beaverton Oregon 97077 (US)

(72) Inventor: Jenness, Timothy A., 6159 S.W. 163rd Place,
Beaverton Oregon 97005 (US)

(74) Representative: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)

(54) Image distortion correction method and apparatus.

(57) An image distortion correction method and apparatus
is disclosed. An electron beam generated in a Cathode-Ray-
Tube (CRT) sweeps horizontally. Simultaneously therewith,
the intensity thereof varies in accordance with an incoming
video signal representative of video information. As a result
thereof, the video information is transferred to a display of
the CRT. Various types of video image distortion appears on
the CRT. To compensate for this distortion, the rate at which
the video information is transferred to the display of the CRT
is varied in accordance with the position of the electron
beam during the sweep thereof. Since the video image
distortion is a function of the position of the electron beam
during the sweep thereof, in accordance with this invention,
said rate at which the video information is transferred to the
display of the CRT is varied in accordance with the par-
ticular distortion being compensated therefor.

# IMAGE DISTORTION CORRECTION METHOD AND APPARATUS

## Background of the Invention

### Field of the Invention

The subject matter of the present invention pertains to an image distortion correction apparatus and to techniques for compensating for various types of image distortion appearing on a display.

### Description of the Prior Art

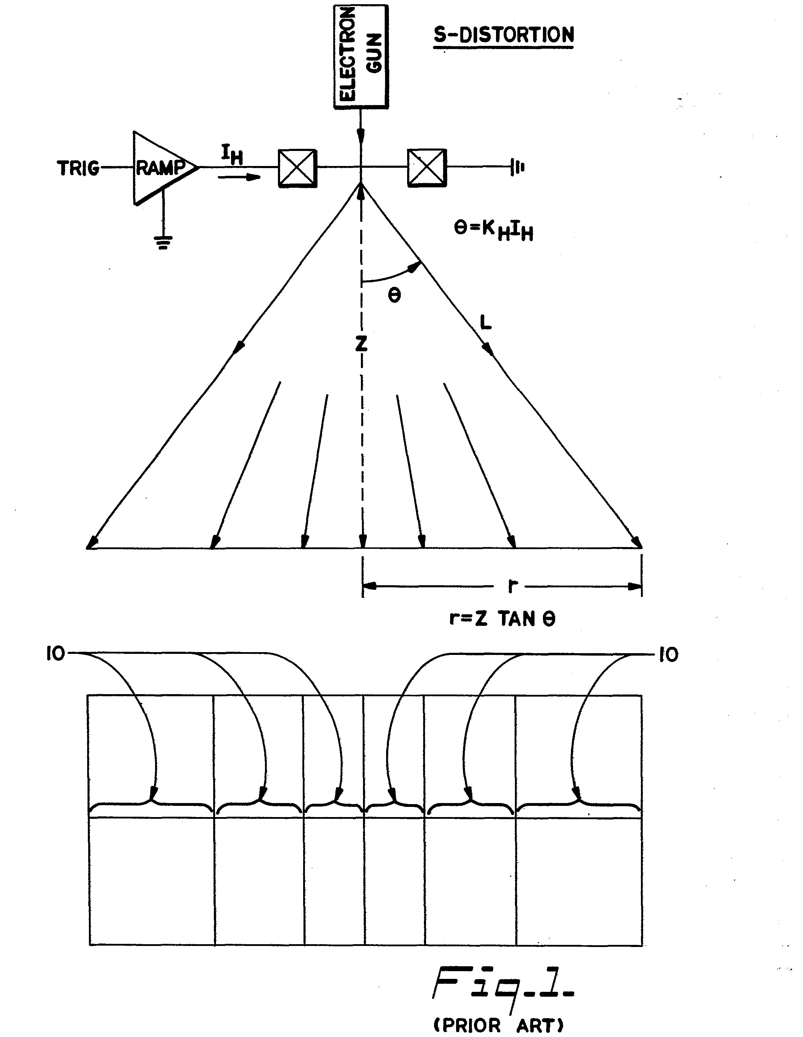

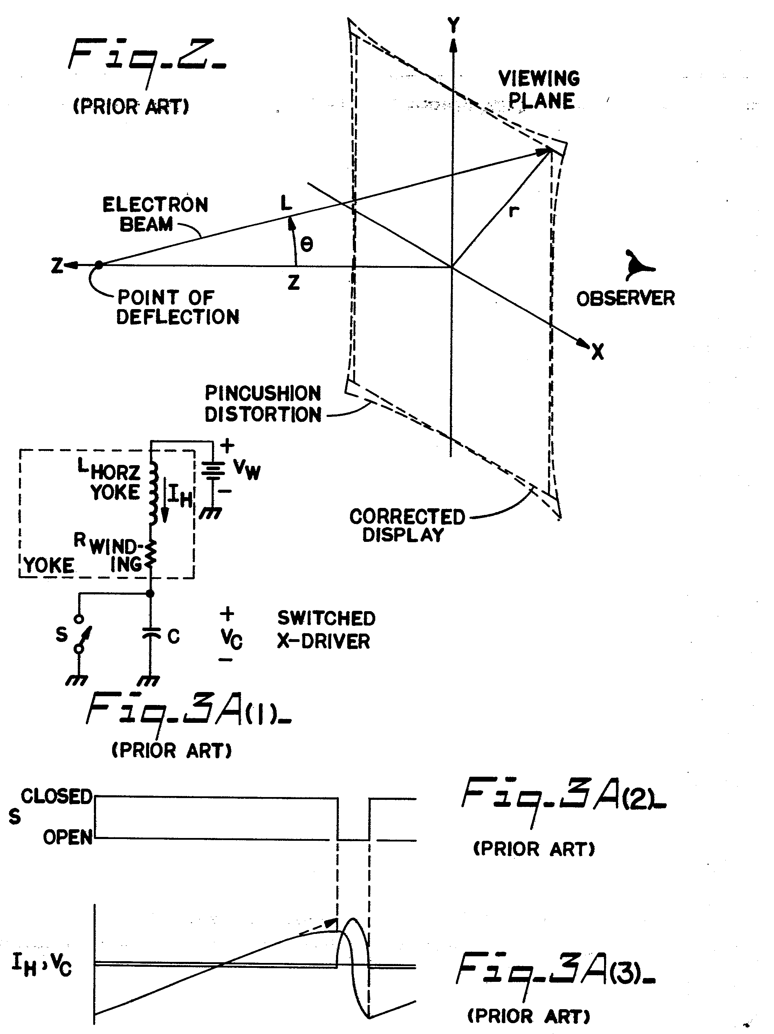

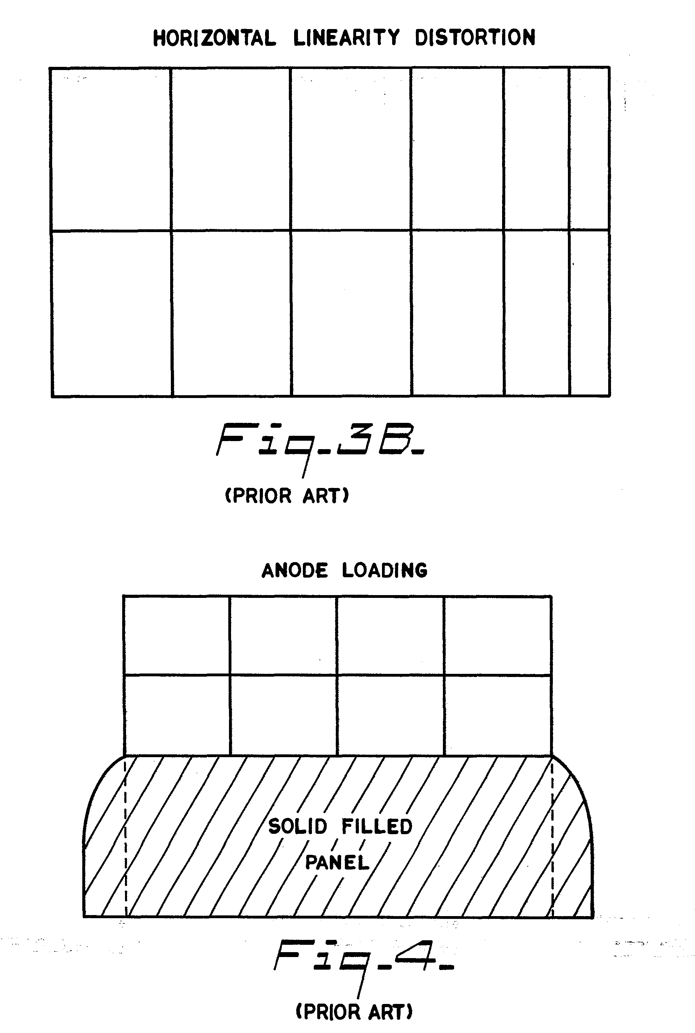

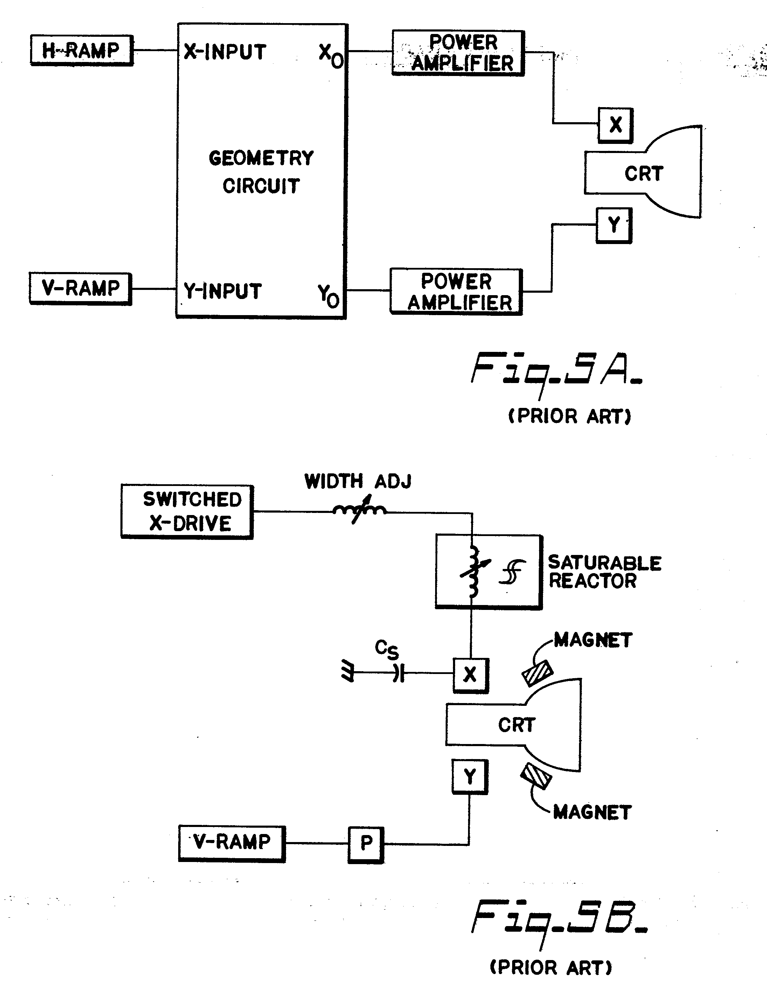

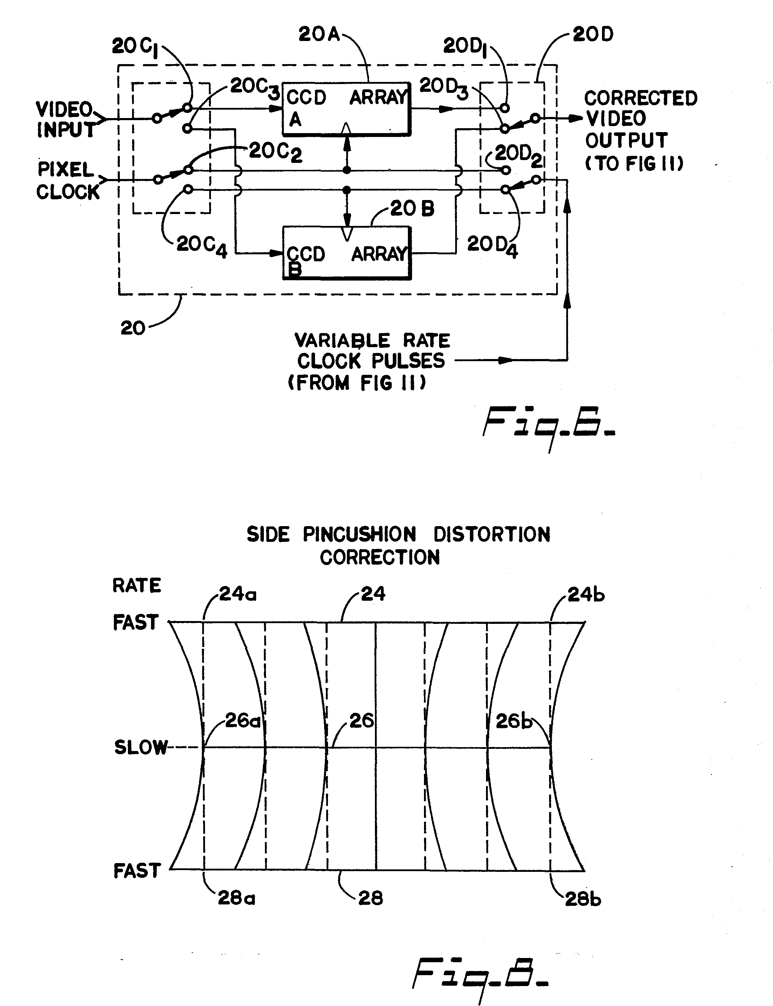

When an electron beam scans across an inner face plate of a Cathode Ray Tube (CRT), while transferring video image information thereto, for display thereon, various types of video image distortion of the video image displayed on the CRT is produced. For example, as shown in figure 1, if the electron beam transfers the video image information to the CRT intermittantly, at equally spaced intervals of time, during the scan thereof across said inner faceplate of said CRT, the video image information will be displayed thereon at non-equally spaced intervals of length or distance. Non-equally spaced intervals of length 10 are illustrated in figure 1. This type of distortion is called S-distortion. In three dimensions, the S-distortion of figure 1 takes a different form. This different form of distortion is called pin cushion distortion, illustrated in figure 2. U.S. patent 4,039,899, to Battjes et al., filed May 3, 1976 illustrates and describes the pin cushion distortion phenomenon. Another form of distortion is called Horizontal linearity distortion, illustrated in figures 3a and 3b. A DC voltage applied to a deflection yoke of the CRT tends to create a ramp current flowing therethrough. However, an inherent winding resistance, in series with the yoke, distorts the ramp current flowing therethrough, such that a

0110282

distorted version thereof, as illustrated in figure 3a (3), is the result. The distorted ramp current, illustrated in figure 3a (3), distorts the video image information displayed on the CRT. The distorted video image, of this type, displayed on the CRT, is illustrated in figure 3b of the drawings.

A still further type of video image distortion is called anode loading, illustrated with reference to figure 4 of the drawings. When the an anode supply voltage of the CRT is excessively loaded (i.e. large beam currents), the anode voltage drops. The deflection sensitivity of said electron beam increases as a result thereof. Consequently, electron beam overscan is the result. This overscan is illustrated in the solid filled panel area of FIG. 4.

U.S. patent 4,039,899, referred to hereinabove, attempts to compensate for these distortions by pre-distorting a deflection signal by an amount necessary to provide an undistorted display. For example, in figure 5a, a horizontal and vertical ramp signal, generated by horizontal and vertical ramp signal generators, energize the X and Y inputs of a Geometry circuit. A typical geometry circuit is illustrated in U.S. patent 4,039,899, referred to above, the disclosure of which is incorporated herein by reference. The geometry current pre-distorts the horizontal and vertical ramp signals by an amount necessary to compensate for the above-mentioned distortions. A pre-distorted corrected X-output signal, and a pre-distorted corrected Y-output signal is generated therefrom, in response thereto, for energizing via power amplifiers P, an X-deflection coil and a Y-deflection coil, respectively, attached to the CRT. Since the horizontal and vertical ramp signals are pre-distorted, prior to energization of the respective X and Y deflection coils, the above-mentioned distortions have been compensated therefor. The prior art also includes a switched X-axis drive of approximated predistortion via magnets, width coil, saturable reactor, and S-capacitor $(C_s)$, as seen in figure 5b.

However, a less costly, alternative method and apparatus is required to compensate for all of the above- mentioned types of video image information distortion.

## Summary of the Invention

It is a primary object of the present invention to provide an alternative, less costly apparatus and method of compensating for said video image distortion.

It is a further object of the present invention to provide an alternative, less costly apparatus and method of compensating for said video image distortion by varying the rate at which said video image information is transferred to said inner faceplate of said CRT for display thereon during the scan of said electron beam thereacross, said rate varying in accordance with the distortion being compensated therefor.

It is still another object of the present invention to extend the method of the present invention, of compensating for said video image distortion, to color CRT's and to provide another apparatus for compensating for said video image distortion in said color CRT's.

These and other objects of the present invention are accomplished by determining the distortion occurring along one axis of deflection of said electron beam. The distortion is determined by predicting the position of said electron beam, during the scan thereof, along said one axis. The rate at which said video image information is transferred to said inner faceplate of said CRT, via the scan of the electron beam, is varied in accordance with the predicted position of said electron beam along said one axis during the scan thereof.

Further scope of applicability of the present invention will become apparent from the description given hereinafter. However, it should be understood that the details of the description and the specific examples, while indicating preferred embodiments of the invention, are given by way of illustration only, since various changes and modifications within the spirit and scope of the invention will become apparent to those skilled in the art from the detailed description.

### Brief Description of the Drawings

A full understanding of the present invention will be obtained from the detailed description given hereinbelow and the accompanying drawings which are given by way of illustration only, and thus are not limitative of the present invention, and wherein:

FIG. 1 illustrates S-Distortion.

FIG. 2 illustrates pincushion distortion.

FIG. 3a - 3b illustrates horizontal linearity distortion.

FIG. 4 illustrates anode loading distortion.

FIG. 5a illustrates a prior art apparatus for compensating for the above-mentioned types of distor-tion.

0110282

FIG. 5b illustrates various scan techniques used in the television industry.

FIG. 6 illustrates an apparatus according to the present invention for developing a corrected video output in response to a video input and a variable rate clock pulse input, the frequency of said determining the rate at which the video image information is transferred to the inner faceplate of said CRT via the scan of said electron beam.

FIG. 7 illustrates the S-distortion of fig. 1, however, the rate at which the video image information is transfered to the CRT via the electron beam is varied in accordance with the S-distortion, whereby the distortion has been compensated therefor.

FIG. 8 illustrates the side pincushion distortion of fig. 2, however, said rate is varied line to line in accordance with said pincushion distortion and the distortion is illustrated as being compensated therefor.

FIG. 9 illustrates the horizontal linearity distortion of fig. 3, however said rate is varied in accordance with said horizontal linearity distortion and the distortion is illustrated as being compensated therefor.

FIG. 10 illustrates the anode loading distortion of figure 4, however, said rate is varied in accordance with said anode loading distortion and the distortion is illustrated as being compensated therefor.

FIG. 11 illustrates an apparatus for developing said variable rate clock pulse input required for said apparatus illustrated in figure 6.

FIG. 12 illustrates a plurality of waveforms associated with the apparatus of fig 11.

FIG. 13 illustrates a plurality of said apparatus of figure 6 for developing a plurality of corrected video outputs in response thereto for use in a conjunction with a color cathode ray tube.

FIG. 14 illustrates a block diagram of the geometry circuit shown in figures 5 and 11.

FIG. 15 illustrates a detailed schematic of the root-law circuit portion of the circuit of figure 14.

FIG. 16 illustrates a detailed schematic of the variable gain amplifier portion of the circuit of figure 14.

## Detailed Description of the Preferred Embodiment

Referring to figure 6, an apparatus 20 for developing a corrected video output in response to a video input and a variable rate clock pulse input is illustrated. A CRT display comprises a plurality of mutually parallel raster lines, each of said raster lines comprising a plurality of picture elements (pixels). A video signal and a pixel clock signal are applied to said apparatus, the video signal comprising a plurality of individual pieces of video information corresponding to the plurality of pixels associated with each raster line of the CRT display. The pixel clock signal comprises a plurality of pulses corresponding to said plurality of pixels. Said apparatus 20 comprises a first array of elements 20A (otherwise known as a CCD array A), and a second array of elements 20B (known as a CCD array B) double-buffered with respect to said first array of elements. The apparatus 20 further comprises a first pair of switches 20C and a second pair of switches 20D. Said first pair of switches 20C includes a first switch, a second switch, a first switch terminal 20C1 and a second switch terminal 20C2, the first switch terminal 20C1 being connected to said first array of elements 20A for storing the pieces of video information therein when said terminal 20C1 receives said information, the second switch terminal 20C2 being connected to a clock terminal of said first array of elements for energizing said terminal with said pulses comprising said pixel clock when said terminal 20C2 receives said pulses. Said first pair of switches 20C further include a third switch terminal 20C3 and a fourth switch terminal 20C4, the third switch terminal 20C3 being connected to said second array of elements for storage of the pieces of video information therein when said terminal 20C3 receives said information, the fourth switch terminal 20C4 being connected to a clock terminal of said second array of elements for energizing said clock terminal with said pulses comprising said pixel clock when said terminal 20C4 receives said pulses.

The second pair of switches 20D includes a first switch, a second switch, a first switch terminal 20D1 and a second switch terminal 20D2. The first switch terminal 20D1 is adapted to receive the pieces of video information from the first array of elements 20A and develops a corrected video output signal therefrom in response thereto when said first switch is connected to said first switch terminal 20D1. The second switch terminal 20D2 is adapted to receive a plurality of variable rate clock pulses when said second switch is connected to the second switch terminal 20D2, the variable rate clock pulses energizing the clock terminal of said first array of elements 20A, the pieces of video information being received at said first switch terminal 20D1 at a rate corresponding to the frequency of said variable rate clock pulses energizing said clock terminal thereof.

The second pair of switches 20D further include a third switch terminal 20D3 and a fourth switch terminal 20D4. The third switch terminal 20D3 is adapted to receive the pieces of video information from the second array of elements 20B and develops said corrected video output therefrom in response thereto when said first switch is connected to said third switch terminal 20D3. The fourth switch terminal 20D4 is adapted to receive the plurality of variable rate clock pulses when said second switch is connected to the fourth switch terminal 20D4, the pulses energizing the clock terminal of said second array of elements 20B, the pieces of video information stored therein being received at said third switch terminal 20D3 at a rate corresponding to the frequency of said variable rate clock pulses energizing said clock terminal of said second array of elements 20B.

The operation of the apparatus of figure 6 will be described in the paragraphs hereinbelow. In figure 6, when the first and second switches associated with the first pair of switches 20C are connected to the first and second switch terminals 20C1 and 20C2, video information is stored in the first array of elements 20A at a rate corresponding to the rate at which the pulses corresponding to the pixel clock energize the clock terminal thereof.

Video information has already been stored in the second array of elements 20B. The first and second switches associated with the second pair of switches 20D are connected to the third and fourth switch terminals 20D3 and 20D4 thereof, the video information stored in the second array of elements 20B being readout of the second array at a rate corresponding to the rate at which the pulses corresponding to the variable rate clock pulses energize the clock terminal of the second array 20B.

0110282

The first and second switches associated with the first pair of switches 20C are switched to the third and fourth switch terminals 20C3 and 20C4, and the first and second switches associated with the second pair of switches 20D are switched to the first and second switch terminals 20D1 and 20D2. The incoming video information is stored in the second array of elements 20B at a rate defined by the frequency of the pulses corresponding to the pixel clock pulses, and the previously stored video information is read out from the first array of elements at the rate defined by the frequency of the variable rate clock pulses.

As a result of the functional operation of the apparatus 20 shown in figure 6, the video information, in the form of said corrected video output, is generated from apparatus 20 at a selectively variable rate, the rate being dependent upon the frequency of the variable rate clock pulses energizing the clock terminals of the first and second arrays of elements 20A and 20B. The frequency of the variable rate clock pulses is further dependent upon the position of the electron beam, during its scan thereof along one axis, across the inner faceplate of the CRT. The position of the electron beam is further dependend upon the type of video image distortion causing distortion of the image displayed on the CRT.

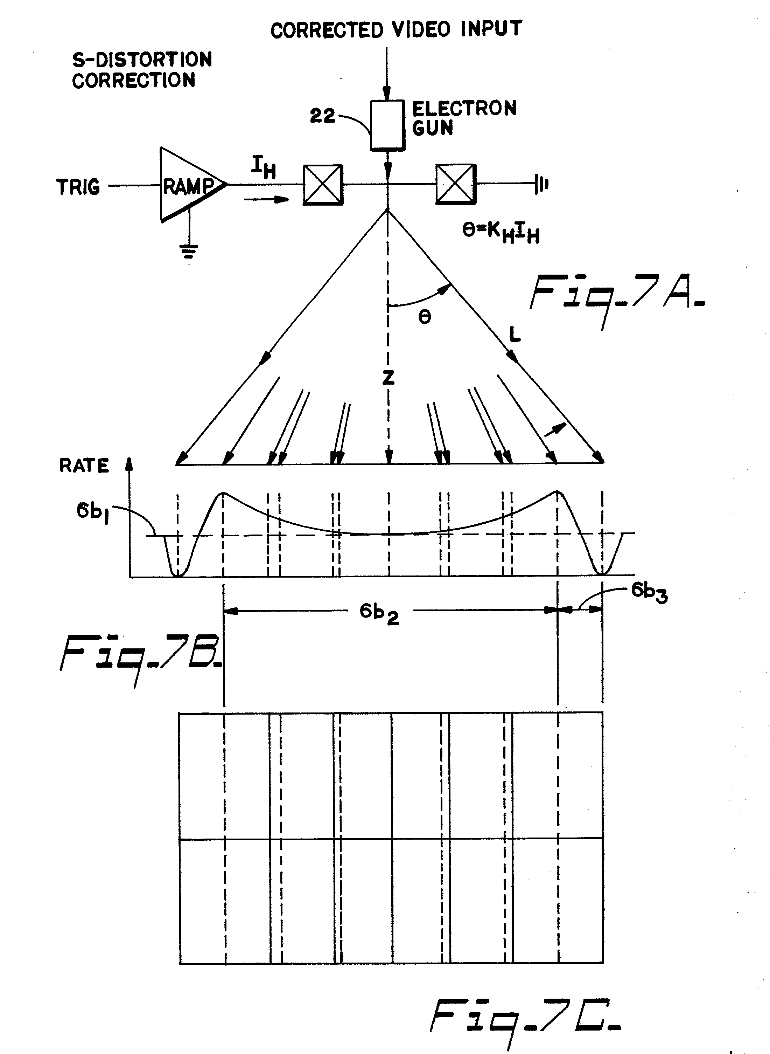

In order to illustrate the superior results achieved by virtue of the invention disclosed herein, relative to the prior art illustrated in figures 1-4, reference is directed to figures 7-10 of the drawings. In figure 7, the S-distortion is illustrated, as in figure 1. However, the rate at which the video information is read from the arrays of elements 20A and 20B associated with the apparatus 20 of figure 6, for energizing the electron guns of the CRT, is varied in accordance with this type of video image distortion. In Fig. 7a, the sweep of the electron beam within the CRT is illustrated. However, as indicated in Fig. 7b, the rate at which the video information is developed from apparatus 20 for energizing the electron guns of the CRT varies depending upon the position of the electron beam when undergoing the scan thereof. In Fig. 7c, the solid lines represent the distorted video image as displayed on the CRT, the image being distorted as a result of said S-distortion as in Fig. 1. However, the dotted lines represent the undistorted video image, as displayed on the CRT, the video image being undistorted as a result of the novel apparatus and method according to the present invention, whereby image information is transferred to the CRT display at a selectively variable rate dependent upon the type of distortion being compensated therefor.

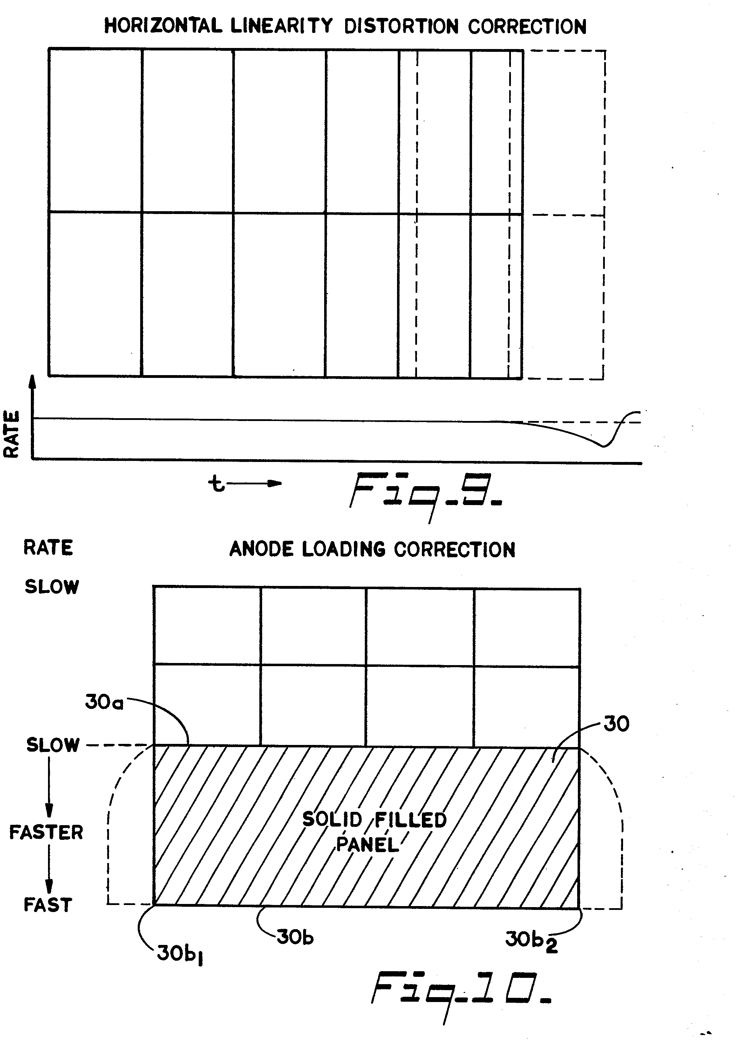

In Fig. 8, the side pincushion distortion of Fig. 2 is illustrated. However, since the rate at which the video information, read from apparatus 20, is varied, for energizing the electron guns of the CRT, the side pincushion distortion has been compensated therefor. The solid lines illustrated in figure 8 represent the image on the CRT display having the side pincushion distortion, whereas the dotted lines represent the image on the CRT display without the side pincushion distortion. As indicated in Fig. 8, a top scan line 24 is traced by the electron beam within the CRT, the rate at which the video information is transferred to the CRT being faster than the rate at which the video informtion is transferred to the CRT when an intermediate scan line 26 is traced. The transfer of the video information occurs at a slower rate, when the intermediate scan line 26 is traced, than when a lowermost scan scan line 28 is traced. When the top scan line 24 is traced, the transfer of the video information begins at a point 24a, the transfer ending at a

0110282

point 24b. When the intermediate scan line 26 is traced, the transfer of the video information begins at a point 26a, the transfer ending at a point 26b. When a lowermost scan line 28 is traced, the transfer of the video information begins at a point 28a, the transfer ending at a point 28b.

In figure 9 the horizontal linearity distortion of Fig. 3 and 4 is illustrated. However, since the rate at which the video information is read from apparatus 20 is varied, for energizing the electron guns of the CRT, the horizontal linearity distortion has been compensated therefor. In Fig. 9, the solid lines represent the image on the CRT display having said horizontal linearity distortion, whereas the solid lines in association with the additional dotted lines represent the image on the CRT display without said horizontal linearity distortion. Note that the rate, at which the video information is read from apparatus 20 for transfer to the CRT display, is gradually decreased as said electron beam sweeps from a point approximately midrange of the sweep to a point corresponding to an extreme right-hand portion of the sweep.

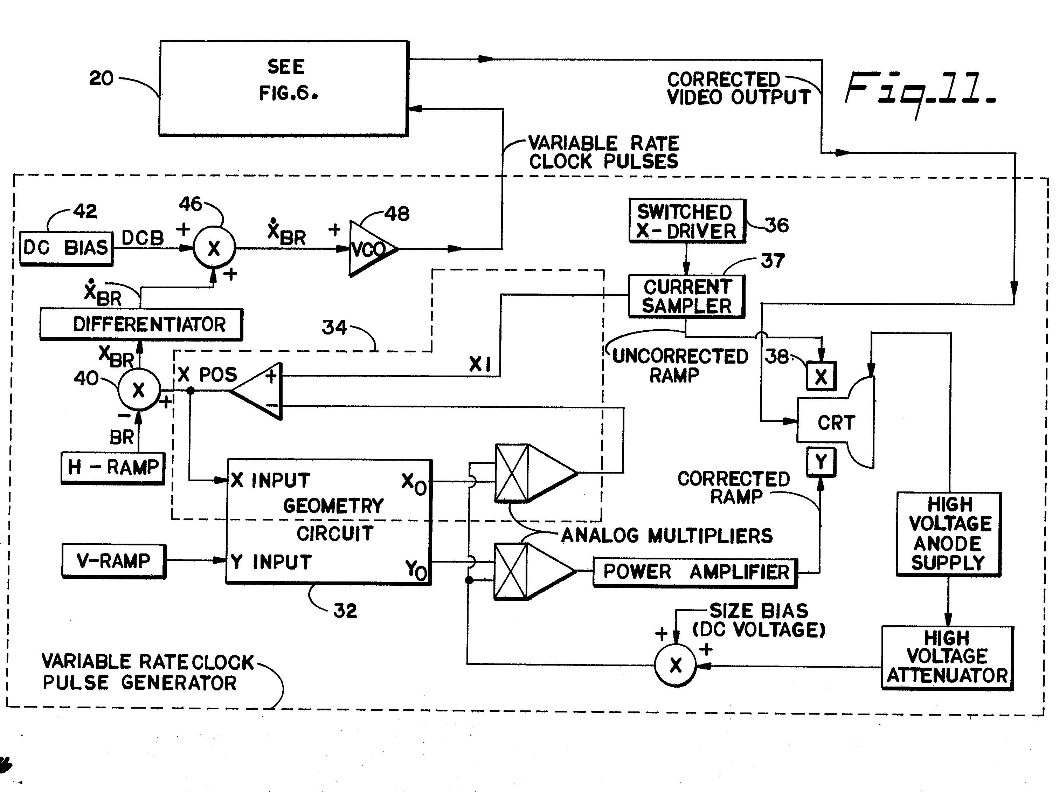

In figure 10, the Anode loading distortion of figure 4 (resulting from deflection sensitivity dependency on anode voltage) is illustrated. As before, since the rate at which the video information read from apparatus 20 is varied, for energizing the electron guns of the CRT, the anode loading distortion has been compensated therefor. In Fig. 10, a solid filled panel area represents a bottom-half portion of the CRT display when said anode loading distortion has been compensated therefor by virtue of the utilization of the present invention. When the electron beam traces an intermediate scan line 30a, the video informtion is read out from apparatus 20 at a relatively slow rate.

As figure 10 indicates, the video information is gradually read from apparatus 20 at a faster and still faster rate beginning with the trace of the intermediate scan line 30a, and ending with the trace of a lowermost scan line 30b. The transfer of the video information from apparatus 20 to the CRT display, via the electron guns of the CRT, begins at a left-most point 30b1, and ends at a right-most point 3b2, as the electron beam traces the scan lines disposed between the intermediate scan line 30a and the lowermost scan line 30b.

In order to fully understand the operation of the apparatus 20 shown in figure 6, it is necessary to further understand the method by which the variable rate clock pulses, utilized by apparatus 20, are produced.

Referring to figure 11, the apparatus 20 of figure 6 is illustrated in conjunction with a variable rate clock pulse generator. In figure 11, the configuration of figure 5 is illustrated; however, the configuration has been modified and altered. As in figure 5, figure 11 illustrtes a vertical ramp signal generator energizing a Y-input terminal of a Geometry circuit 32.

A typical Geometry circuit may be found in U.S. patent 4,039,899 to Battjes et al., the disclosure of which is hereby incorporated by reference.

The Y-output of the Geometry circuit 32 is connected to an analog multiplier. The output of this analog multiplier produces a pre-distorted, corrected ramp signal for energizing a Y- axis deflection coil 34 of a CRT via a power amplifier. However, contrary to the figure 5a configuration, in fig. 11, the X-input and the X-output of the Geometry circuit 32 lies within a feedback loop of an operational amplifier 34. The X-output of the Geometry circuit is connected to the negative input terminal of the operational amplifier, via analog multiplier. The X-input of said Geometry circut is connected to an output terminal of said operational amplifier 34.

One input terminal of both said analog multipliers receives a voltage proportional to the anode supply voltage of the CRT. The voltage present at the output terminal of said analog multipliers represent predistorted, corrected functions designed to compensate for all of the various types of video image distortions illustrated with reference to figures 1-5.

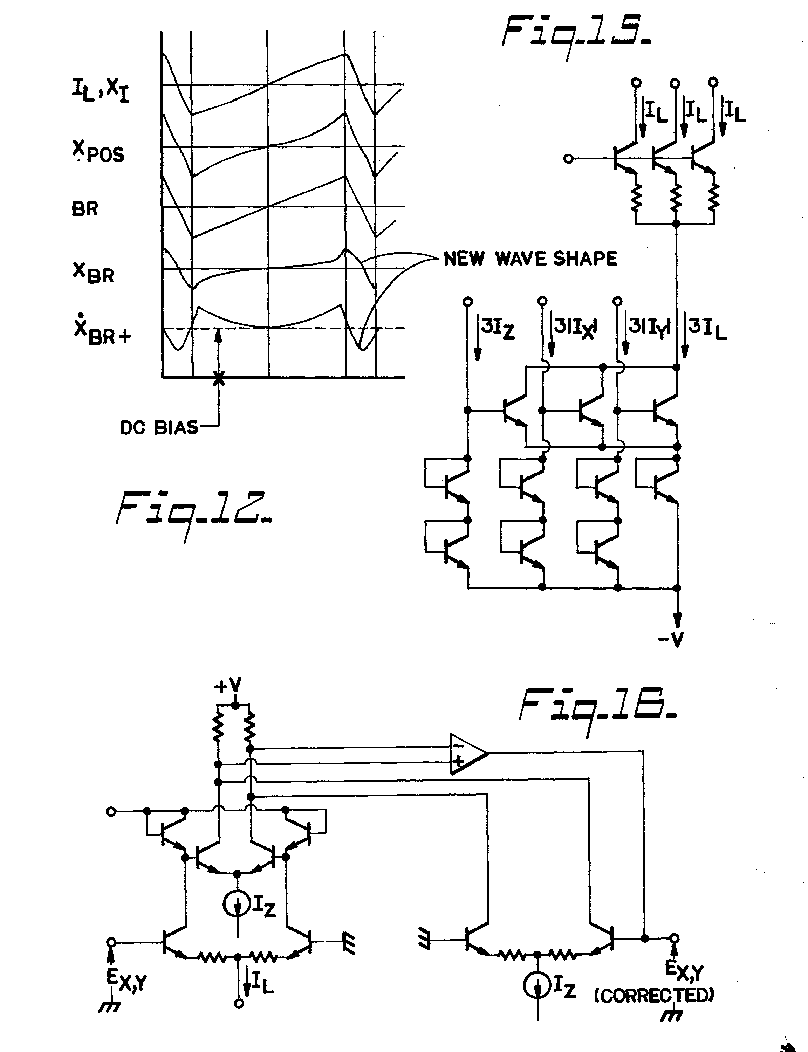

A switched X-driver 36 produces an un-predistorted, uncorrected ramp signal. The X-driver is connected to an X-axis deflection coil 38 of said CRT, the un-predistorted, uncorrected ramp signal energizing said X-axis deflection coil 38. A ramp signal current $I_L$ corresponding to said unpredistorted uncorrected ramp signal, is sensed in said coil 38, the voltage corresponding thereto deflecting the electron beam, horizontally. The ramp signal current $I_L$ corresponding to the un-predistorted ramp signal energizing said coil 38, is converted to a corresponding ramp signal voltage $X_I$. The ramp signal voltage $X_I$ energizes the positive input terminal of the operational amplifier 34. A signal "Xpos" appears at the output terminal of operational amplifier 34. The signal waveforms corresponding to signals $I_L$, $X_I$ and Xpos are illustrated in figure 12 of the drawings.

The operational amplifier 34 is connected in a unique way for a particular purpose. The signal voltage $X_I$ energizing the positive input terminal of said amplifier 34, represents an un-predistorted linear function, the signal voltage $X_I$ deflecting the electron beam horizontally within the CRT. The Geometry circuit 32, and analog multiplier, in the feedback loop of the operational amplifier 34, generally represents a non-linear signal generating circuit, the non-linear signal generated by the Geometry circuit and analog multiplier, being a pre-distorted, non-linear function, the non-linear signal energizing the negative input terminal of the operational amplifier 34.

It may be shown that an operational amplifier, configured in the above manner, (wherein a non-linear signal generating circuit is positioned in the feedback loop thereof and energizes one input terminal thereof and a linear signal energizes another input terminal thereof) develops a "position- predictable" signal at the output terminal thereof.

In the context of figure 11, the signal "Xpos" represents the "position predictable" signal. The amplitude of signal "Xpos" represents the position of the electron beam during its deflection thereof as measured along the X axis of the CRT. Therefore, the signal "Xpos" represents an X-axis "position predictable" signal, in that the position of the electron beam, as it is deflected along the X-axis thereof, is predictable.

In order to normalize active and blanking pixel rates to the scanning and retrace times, respectively, it is necessary to process the signals in terms of positional and velocity error.

The output terminal of the operational amplifier 34 is connected to a summer 40. A horizontal ramp signal generator 42 is also connected to the summer 40, and generates a ramp signal BR, as shown in Fig. 12. The ramp signal BR, represents the ideal position of the electron beam along the X-axis. The summer 40 subtracts ramp signal BR from signal Xpos, yielding signal $X_{BR}$. Signal $X_{BR}$ is shown in Fig. 12. Since signal Xpos represents the predictable position of the electron beam, along the horizontal axis (X axis) on the CRT, and since signal BR is an ideal representation of the electron beam position along the X-axis, signal $X_{BR}$ represents the positional error of the electron beam along the X-axis thereof.

The output of summer 40 is connected to a differentiator 44; therefore, signal $X_{BR}$ energizes said differentiator. The differentiator 44 differentiates signal $X_{BR}$ with respect to time, yielding a differentiated signal $\dot{X}_{BR}$. Since signal $X_{BR}$ represents the positional error of the electron beam within the CRT along the X-axis thereof, the differentiated signal $\dot{X}_{BR}$ represents the velocity or rate error at which the electron beam sweeps from left to right, across the CRT, along the X-axis thereof. Alternatively, signal $\dot{X}_{BR}$ may be viewed as representing the error in screen velocity of the electron beam as it sweeps along the X-axis thereof.

A summer 46 is connected to the output of the differentiator 44, and to the D.C. bias source 42 for adding a D.C. offset signal (DCB) to the differentiated signal $\dot{X}_{BR}$ yielding signal $\dot{X}_{BR+}$. Signal $\dot{X}_{BR+}$ is a function of signal $\dot{X}_{BR}$ offset by the signal DCB and is therefore representative of the normalized velocity or rate at which the electron beam sweeps from left to right (active), and right to left (blanking) across the CRT, along the X-axis thereof. Signals $\dot{X}_{BR}$ and $X_{BR+}$ are illustrated in figure 12 of the drawings.

Signal $\dot{X}_{BR+}$ energizes an input terminal of a voltage controlled oscillator 48, the oscillator 48 generating the variable rate clock pulses, the frequency of said pulses varying in accordance with the voltage of

signal $\dot{X}_{BR+}$ energizing the input terminal thereof. The variable rate clock pulses are applied to the switch terminals (20D2 or 20D4) associated with the second pair of switches 20D of apparatus 20 shown in figures 6 and 11.

The operation of the Image Distortion Correction apparatus shown in figure 11 is described in detail in the paragraphs hereinbelow.

Assume that the switched position of the first and second pairs of switches 20C and 20D are as illustrated in figure 11 of the drawings.

The image displayed on the CRT is generated as a result of the electron beam tracing a plurality of scan lines on the CRT to form a frame of video information, a multitude of frames of video information constituting said image being displayed on the CRT.

A scan line of video information is stored in the first array of elements 20A, via switch terminal 20C1, at a rate which is determined by the frequency of the pixel clock pulses energizing the clock terminal thereof. Each pixel clock pulse corresponds to one pixel on one scan line traced across the inner faceplate of the CRT. An immediately previous scan line of video information is stored in the second array of elements 20B. The video information stored in the second array of elements 20B is read therefrom via switch terminal 20D3 at a rate determined by the frequency of the variable rate clock pulses energizing the clock terminal thereof.

The frequency of the variable rate clock pulses is determined as follows, with reference to figure 11 and 12 of the drawings.

The X-driver 36 develops an uncorrected, unpredistorted ramp current waveform which energizes the current sampler 37 and X deflection coil 38, attached to the CRT. A corresponding uncorrected, unpredistorted ramp signal voltage, $X_I$, is developed in response thereto, the ramp signal voltage energizing the positive input terminal of operational amplifier 34. A predistorted, corrected voltage, developed at the X-output terminal of Geometry circuit 32, energizes the analog multiplier connected thereto. An output signal generated therefrom energizes the negative input terminal thereof. In response thereto, the operational amplifier 34 develops a position predictable signal (Xpos) at the output terminal thereof. Summer 40 subtracts a ramp signal (BR) from the position predict-able signal (Xpos). The resultant signal ($X_{BR}$) is re-presentative of the position error of the electron beam as it sweeps from left to-right along the X axis of the CRT display. The differentiator 44 differentiates signal ($X_{BR}$), yielding the differentiated sig-nal ($\dot{X}_{BR}$), in order to determine the rate (i.e. velocity) error of the electron beam at each point in time as it sweeps along the horizontal X axis of the CRT. Summer 46 adds DC Bias (DCB) to the differentiated signal ($\dot{X}_{BR}$) to yield signal ($\dot{X}_{BR+}$), which is representative of the normalized (active and blanking) rate. A voltage controlled oscillator 48, responsive to signal ($\dot{X}_{BR+}$), develops said variable rate clock pulses, the frequency of which varies in accordance with the voltage magnatude of said signal ($\dot{X}_{BR+}$).

As the variable rate clock pulses energize the clock terminal of the second array 20B, a plurality of signals representative of the video information stored therein are read therefrom at a rate determined by the frequency of said variable rate clock pulses. Said plurality of signals energize the electron guns within the CRT at said rate, transferring said video information to the CRT display at said rate while the electron beam is sweeping across the inner faceplate of the CRT.

In summary, the apparatus shown in figure 11, inclusive of the variable rate clock pulse generator and the apparatus 20, operates in the following manner: as the linear velocity of the electron beam increases during its sweep along the horizontal, X axis thereof, said rate at which the plurality of signals are read from the second array of elements increases. As a result, the video information is transferred to the CRT display at a faster rate as a result thereof. Similarly, as said linear velocity decreases, said rate also decreases proportionately.

When the video information stored in the second array of elements is completely read therefrom, the first and second pairs of switches 20C and 20D switch to their alternate switched positions, (20C3, 20C4; 20D1, 20D2). The video information is read from the first array of elements 20A and video information is stored in the second array of elements 20B, in the manner hereinbefore described in the above paragraphs. The above-mentioned functional operation of the present invention repeats once again.

Referring to figure 13, the image distortion correction method and apparatus of the present invention is utilized in conjunction with a color CRT. In lieu of one apparatus 20, as shown in figure 6, three such apparatus is shown, one corresponding to the red electron gun within the CRT, another corresponding to the green electron gun, and another corresponding to the blue electron gun within the CRT. The same inputs to the apparati are shown, i.e., the pixel clock input, the video input (Red, Green, and Blue video input), and the variable rate clock pulses, as specifically discussed in the paragraphs hereinabove with reference to figures 6 and 11.

The signal $X_{BR+}$, output from summer 46 of figure 11, is input to two summers 50, 52, and to a voltage controlled oscillator 48. A red-lateral rate signal is input to summer 50. The purpose of a red lateral signal is to achieve convergence of the red and green electron beams within the CRT by moving the red beam in line with the green beam. The red lateral signal has been differentiated to achieve the red-lateral rate signal input to summer 50. A blue- lateral rate signal is input to summer 52. The purpose of a blue lateral signal is to achieve convergence of the blue and green beams by moving the blue beam in line with the green beam. The blue lateral signal has been differentiated to achieve the blue lateral rate signal input to summer 52. The function of the system shown in figure 13 is substantially the same as the function of Fig. 11 described above.

Fig. 14 illustrates a block diagram of the Geometry circuit 32 shown in figures 5 and 11.

Fig. 15 illustrates a detailed schematic of the root- law circuit portion of the circuit of figure 14.

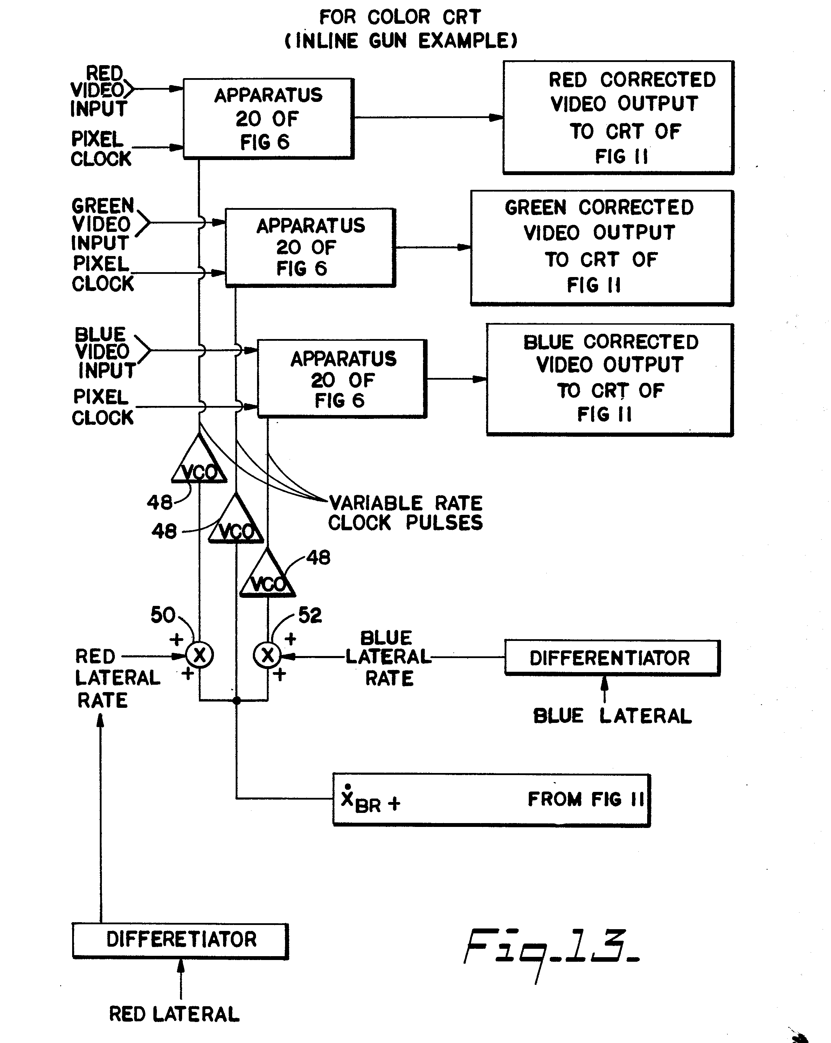

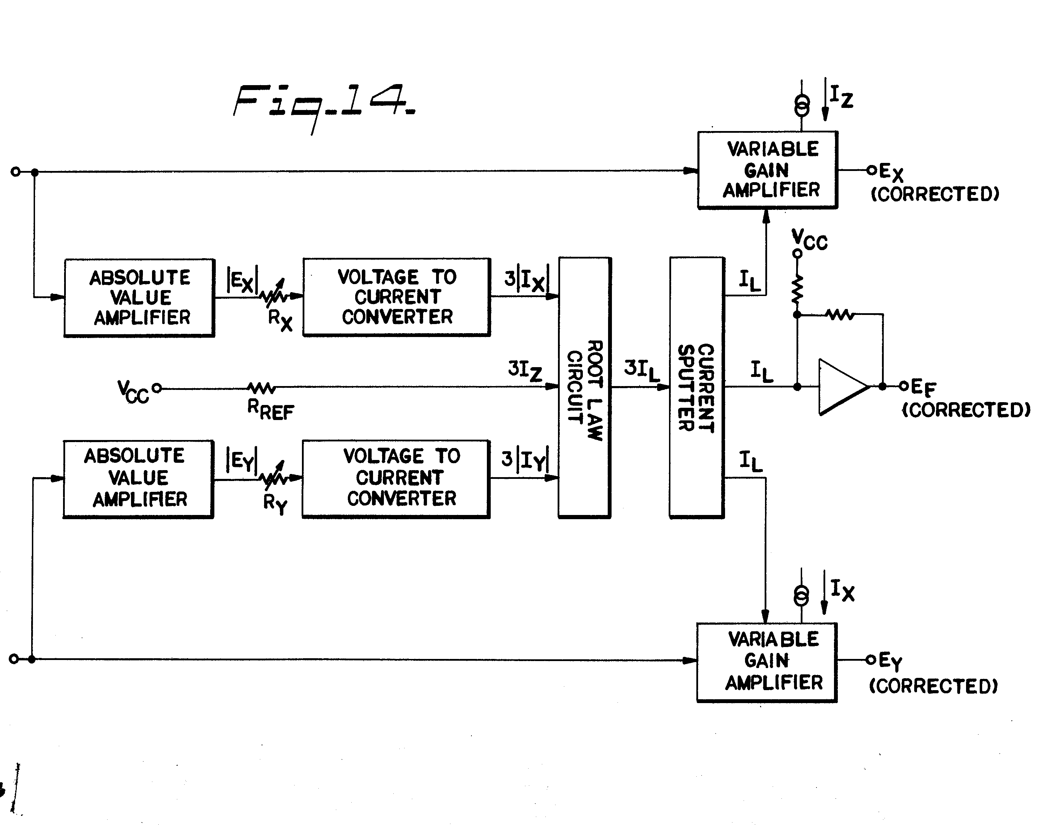

Fig. 16 illustrates a detailed schematic of the variable gain amplifier portion of the circuit of figure 14.

The invention being thus described, it will be obvious that the same may be varied in many ways. Such variations are not to be regarded as a departure from the spirit and scope of the invention and all such modifications as would be obvious to one skilled in the art are intended to be included within the scope of the following claims.

What I claim as novel is:

1. An image distortion compensation and correction apparatus for compensating for a video image distortion of a video image on a display, comprising:

first means responsive to a plurality of video input signals for generating a plurality of video output signals representative of said video image in response thereto;

second means connected to the first means for varying the rate at which said plurality of video input signals are generated from said first means in accordance with said video image distortion thereby generating said plurality of video output signals therefrom; and

third means responsive to said plurality of video output signals for generating said display of said video image.

2. An image distortion compensation and correction apparatus of claim 1 wherein: said distortion is represented by the amplitude of a current; and

video signal generation rate is varied according to said amplitude of said current.

3. The image distortion compensation and correction apparatus of claim 1, wherein said third means comprises:

a cathode-ray-tube including an electron beam generating means; and

deflection means for deflecting the electron beam produced by said electron beam generating means, the deflected electron beam producing said video image on said cathode ray tube; and

wherein said second means comprises:

means for developing a position predictable signal representative of a position of the electron beam along a horizontal axis of said cathode-ray-tube during the the deflection thereof;

means responsive to said position predictable signal for differentiating said signal thereby producing a rate signal representative of the rate at which said electron beam is deflected along said horizontal axis, and

means responsive to the rate signal for developing a plurality of pulses, the frequency of which varies in accordance with the voltage level of said rate signal,

the frequency of said plurality of pulses being determinative of the rate at which said plurality of video signals are generated.

4. A method of compensating and correcting for video image distortion of a video image appearing on a display, said video image being produced on said display in response to the generation of a video information signal associated with each picture element of said display, comprising the steps of:

varying the rate at which the video information signals associated with the picture elements of said display are generated in accordance with said video image distortion; and

producing said video image on said display in response to the rate-varied video information signals.

**S-DISTORTION**

$$\theta = K_H I_H$$

$$r = Z\ \text{TAN}\ \theta$$

**Fig. 1.**

(PRIOR ART)

Fig.2.
(PRIOR ART)

VIEWING PLANE

ELECTRON BEAM

POINT OF DEFLECTION

PINCUSHION DISTORTION

CORRECTED DISPLAY

OBSERVER

Fig.3A(1)
(PRIOR ART)

SWITCHED X-DRIVER

Fig.3A(2)
(PRIOR ART)

Fig.3A(3)
(PRIOR ART)

0110282

## HORIZONTAL LINEARITY DISTORTION

*Fig. 3B.*

(PRIOR ART)

## ANODE LOADING

SOLID FILLED
PANEL

*Fig. 4.*

(PRIOR ART)

0110282

Fig.5A.

(PRIOR ART)

Fig.5B.

(PRIOR ART)

0110282

Fig. 6.

SIDE PINCUSHION DISTORTION
CORRECTION

Fig. 8.

CORRECTED VIDEO INPUT

S-DISTORTION
CORRECTION

ELECTRON
GUN

22

TRIG ── RAMP ── $I_H$ ──

$\theta = K_H I_H$

$\theta$

Z

L

*Fig.7A.*

RATE

6b₁

6b₂

6b₃

*Fig.7B.*

*Fig.7C.*

## HORIZONTAL LINEARITY DISTORTION CORRECTION

RATE

t →

*Fig. 9.*

## ANODE LOADING CORRECTION

RATE

SLOW

30a

SLOW

FASTER

FAST

SOLID FILLED
PANEL

30

30b₁

30b

30b₂

*Fig. 10.*

*Fig.11.*

- **20** SEE FIG.6.
- CORRECTED VIDEO OUTPUT
- VARIABLE RATE CLOCK PULSES
- **42** DC BIAS
- **46**
- DCB
- $\dot{X}_{BR}$
- **48** VCO
- $\dot{X}_{BR}$
- DIFFERENTIATOR
- $X_{BR}$
- **40**
- BR
- H − RAMP
- X POS
- **34**
- X1
- **36** SWITCHED X − DRIVER
- **37** CURRENT SAMPLER
- UNCORRECTED RAMP
- **38**
- X
- CRT
- Y
- CORRECTED RAMP
- X INPUT
- GEOMETRY CIRCUIT
- $X_O$
- V−RAMP
- Y INPUT
- $Y_O$
- **32**
- ANALOG MULTIPLIERS
- POWER AMPLIFIER
- SIZE BIAS (DC VOLTAGE)
- HIGH VOLTAGE ANODE SUPPLY
- HIGH VOLTAGE ATTENUATOR
- VARIABLE RATE CLOCK PULSE GENERATOR

Fiq.15.

Fig.12.

Fig.16.

FOR COLOR CRT
(INLINE GUN EXAMPLE)

Fig.13.

Fig.14.

European Patent
Office

**EUROPEAN SEARCH REPORT**

0110282

*Application Number*

| | **DOCUMENTS CONSIDERED TO BE RELEVANT** | | EP 83111620.7 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | US - A - 4 152 725 (BECKMANN)<br>* Abstract *<br>-- | | H 04 N 3/22 |
| A | GB - A - 1 588 652 (THORN)<br>* Page 1, lines 10-84 *<br>-- | | |
| A | US - A - 3 487 164 (EGGERT)<br>* Column 1, line 13 - column 2, line 33 *<br>-- | | |
| A | US - A - 3 713 001 (WAEHNER)<br>* Abstract *<br>-- | | |
| A | US - A - 4 184 104 (SHOUSE)<br>* Abstract *<br>---- | | **TECHNICAL FIELDS SEARCHED (Int. Cl. ³)**<br><br>H 04 N 3/00<br>H 01 J 29/00 |

The present search report has been drawn up for all claims

| Place of search | Date of completion of the search | Examiner |
|---|---|---|
| VIENNA | 15-02-1984 | BENISCHKA |